Europäisches Patentamt

European Patent Office

Office européen des brevets

(11) Publication number: **0 173 286**
**B1**

# (12) EUROPEAN PATENT SPECIFICATION

(45) Date of publication of patent specification: **19.12.90**

(51) Int. Cl.⁵: **H 04 L 12/40,** H 04 B 10/20

(21) Application number: **85110702.9**

(22) Date of filing: **26.08.85**

(54) **Optical communication network system with collision detection.**

(30) Priority: **30.08.84 JP 181019/84**

(43) Date of publication of application:
**05.03.86 Bulletin 86/10**

(45) Publication of the grant of the patent:
**19.12.90 Bulletin 90/51**

(84) Designated Contracting States:
**DE GB IT NL**

(56) References cited:
**DE-A-3 216 028**
**DE-A-3 417 652**
**FR-A-2 512 298**

**GLOBECOM 82 IEEE GLOBAL
TELECOMMUNICATIONS CONFERENCE, vol. 2,
Miami, US, 29th November - 2nd December
1982, pages D6.3.1 - D6.3.4, IEEE, New York, US;
A. ALBANESE et al.: "Bidirectional lightwave
bus"**

(73) Proprietor: **KABUSHIKI KAISHA TOSHIBA
72, Horikawa-cho Saiwai-ku
Kawasaki-shi Kanagawa-ken 210 (JP)**

(72) Inventor: **Tomikawa, Masataka c/o Patent
Division
Kabushiki Kaisha Toshiba 1-1 Shibaura
Minato-ku Tokyo 105 (JP)**

(74) Representative: **Henkel, Feiler, Hänzel & Partner
Möhlstrasse 37
D-8000 München 80 (DE)**

Courier Press, Leamington Spa, England.

## Description

This invention relates to an optical communication network system and, more particularly, to an optical communication network system which is improved in detection of a signal collision.

Various types of control systems have been proposed as a data bus access control system for a local area network (LAN). Above all, a carrier sense multiaccess/collision detection (CSMA/CD) system is well known as "ETHERNET" (trademark). The LAN employing this system uses a coaxial cable as its transmission medium to interconnect a plurality of stations.

Various LANs which use the CSMA/CD system and a light transmission path as the transmission medium have hitherto been proposed. A technical problem arising from utilization of an optical transmission path resides in the difficulty of detecting a signal collision which occurs when signals are simultaneously transmitted from two or more stations. With the detection systems so far proposed, it is difficult to reliably detect such a signal collision. According to a typical detection system, a light signal is converted into an electric signal in a transmission path and a collision is detected on the basis of the amplitude level of the electric signal.

An object of the present invention is to provide an optical communication network system based on the use of the CSMA/CD system which can reliably detect a collision of transmission signals from a plurality of data terminal stations.

According to the present invention, each data terminal station involved in an optical communication network system is arranged to alternately generate and transmit light signals of wavelengths $\lambda_1$ and $\lambda_2$ in accordance with two value states of a data signal to be transmitted into a transmission medium, and to alternately receive light signals of the wavelengths $\lambda_1$ and $\lambda_2$ transmitted over the transmission medium to demodulate a data signal. In this optical communication network system, when two or more stations simultaneously transmit light signals, signals of the wavelengths $\lambda_1$ and $\lambda_2$ are received overlapping one another during a specified period of time or greater. Each data terminal station comprises means for detecting such an overlap of the light signals of the wavelengths $\lambda_1$ and $\lambda_2$ to produce a collision detection signal when an overlap is detected for the duration of the specified time period.

According to the present invention, it is possible to provide a CSMA/CD local area network which enables a reliable detection of signal collisions by using light signals of two wavelengths. Stations which can be connected to the CSMA/CD LAN using coaxial cables can be connected to the optical CSMA/CD LAN using optical fiber cables without need of modification.

This invention can be more fully understood from the following detailed description when taken in conjunction with the accompanying drawings, in which:

Fig. 1 schematically shows an arrangement of an optical network system according to the present invention;

Fig. 2 schematically shows an optical star coupler;

Fig. 3 shows an arrangement of a transmitting and receiving unit (medium attachment unit);

Fig. 4 shows an optical multiplexer which is used in the transmitting and receiving unit;

Fig. 5 shows an optical demultiplexer which is used in the transmitting and receiving unit;

Fig. 6 shows waveforms of signals at parts of the transmitting and receiving unit in signal transmission;

Fig. 7 shows waveforms of signals at parts of the transmitting and receiving unit in signal reception; and,

Fig. 8 shows waveforms of signals at parts of each station when a plurality of stations transmit signals simultaneously.

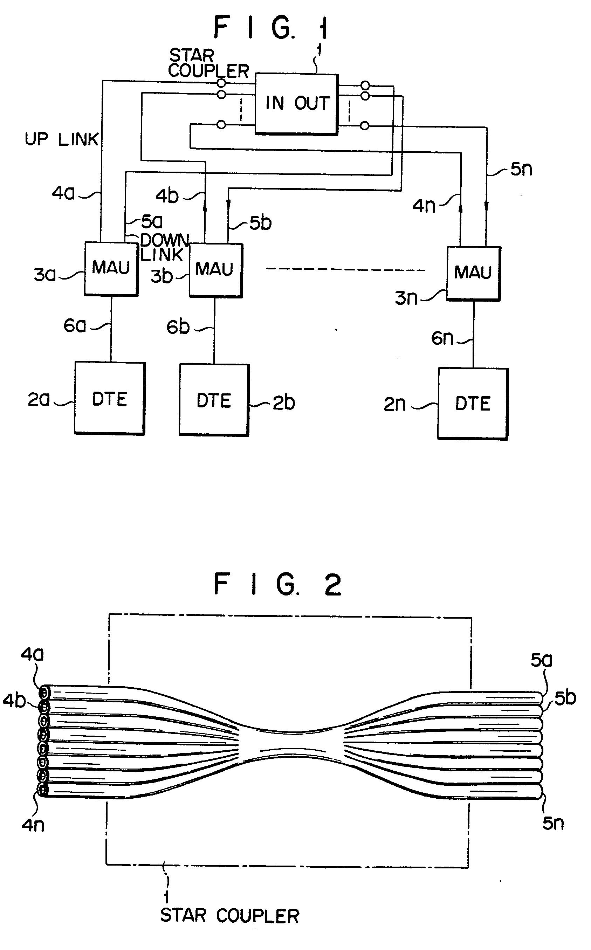

Referring to Fig. 1 which shows an optical star network according to an embodiment of the present invention, a plurality of stations are coupled to a star coupler 1 by way of light transmission paths. As shown in detail in Fig. 2, this star coupler is constructed such that an input light from an optical fiber at one input port is allowed to branch into optical fibers at all output ports.

Each station has data terminal equipment (DTEs) 2a, 2b, ... 2n such as electronic computers, and medium attachment units (MAUs) 3a, 3b, ... 3n which are coupled to the corresponding DTEs. Each MAU is arranged to convert an electric signal from the corresponding DTE into a light transmission signal for transmission over an optical channel, convert a received light transmission signal into an electric signal for application to the DTE, and detect a collision of transmission signals from two or more stations on the optical channel.

Light signals transmitted from MAUs 3a, 3b ... 3n are conveyed to star coupler 1 via light transmission paths (up links) 4a, 4b, ... 4n, respectively, and light transmission signals which appear at the output ports of star coupler 1 are led to MAUs 3a, 3b, ... 3n via light transmission paths (down links) 5a, 5b, ... 5n. DTEs 2a, 2b, ... 2n are coupled to MAUs 3a, 3b, ... 3n via tranceiver cables 6a, 6b, ... 6n, respectively.

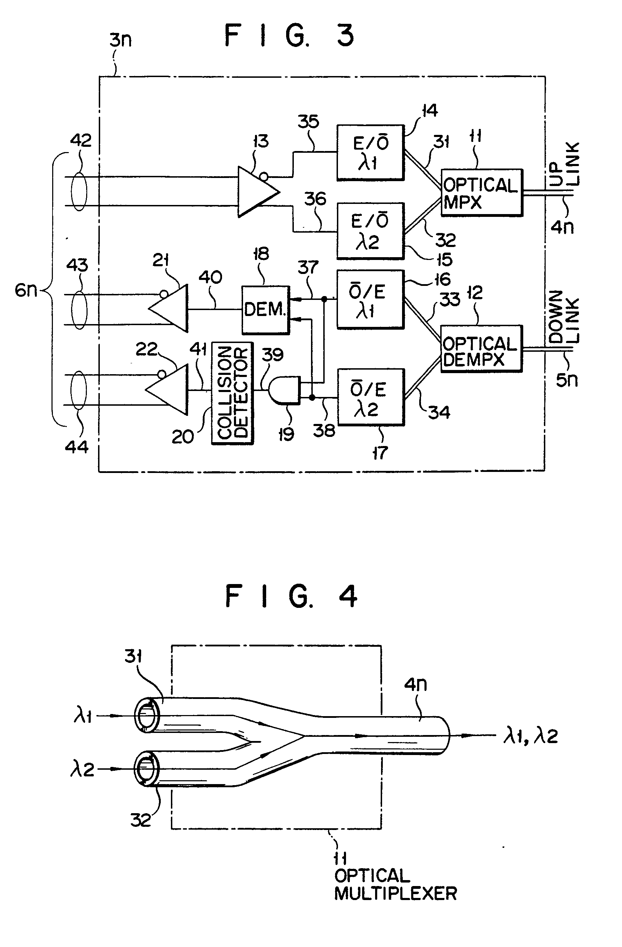

Fig. 3 shows an arrangement of MAU 3n. An optical multiplexer 11 introduces into light transmission path 4n output light signals from electric-to-optical converters 14 and 15, adapted to generate light signals of wavelengths $\lambda_1$ and $\lambda_2$, respectively, and an optical demultiplexer 12 separates, into light signals of the wavelengths $\lambda_1$ and $\lambda_2$, a light transmission signal which has been transmitted over light transmission path 5n.

Transceiver cable 6n, coupled to DTE 2n, includes a transmission signal line 42, a reception signal line 43 and a collision detection signal line 44. A transmission signal is applied through transmission signal line 42 to a reception circuit 13 having complementary outputs 35 and 36 which drive electric-to-light converters 14 and 15 to generate light signals of the wavelengths $\lambda_1$ and $\lambda_2$, respectively. These light signals are led to optical multiplexer 11 via optical transmission lines 31 and 32, respectively.

The light signals of the wavelengths $\lambda_1$ and $\lambda_2$, separated by optical demultiplexer 12, are supplied to optical-to-electric converters 16 and 17 through light transmission paths 33 and 34, respectively, to be converted into electric signals. The output signals 37 and 38 of optical-to-electric converters 16 and 17 are coupled to a demodulation circuit 18 to demodulate a received signal. Demodulation circuit 18 may be constituted by a set/reset type flip-flop circuit. Further, output signals 37 and 38 of optical-to-electric converters 16 and 17 are coupled to a signal collision detection circuit 20 via an AND circuit 19. An output demodulation signal 40 of demodulation circuit 18, and an output collision detection signal 41 of signal collision detection circuit 20 are coupled to reception signal line 43, and collision detection signal line 44 via driver circuits 21 and 22, respectively.

Fig. 4 shows an arrangement of optical multiplexer 11. The light signal of the wavelength $\lambda_1$, transmitted over light transmission line 31, and the light signal of the wavelength $\lambda_2$, transmitted over light transmission line 32, are commonly introduced into light transmission path 4n.

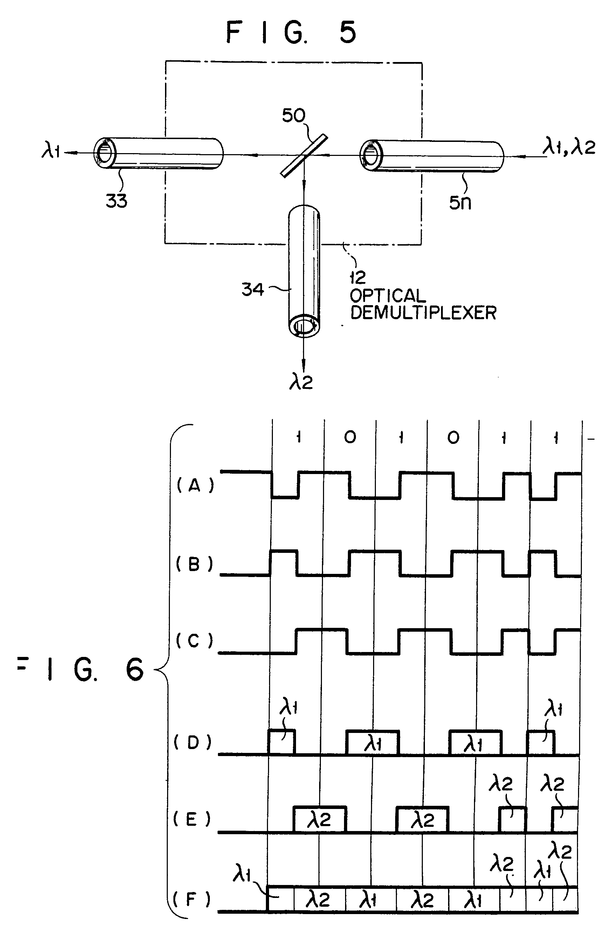

Fig. 5 shows an arrangement of optical demultiplexer 12. This optical demultiplexer 12 is provided with a half-mirror 50 through which the light signal of the wavelength $\lambda_1$ is transmitted to light transmission path 33, and by which the light signal of the wavelength $\lambda_2$ is refelected to light transmission path 34.

The operation of the optical network system so far described will be described. It is assumed that signals are transmitted in the Manchester coded form.

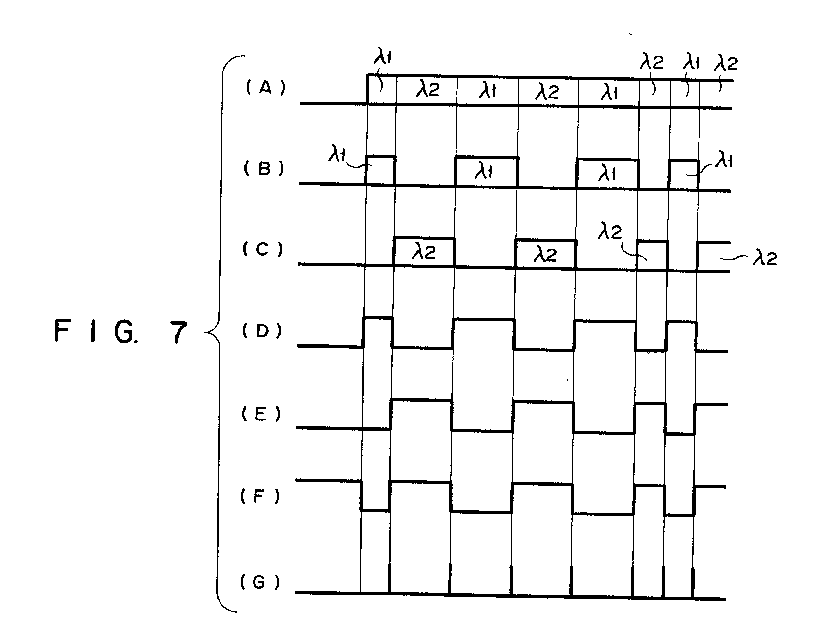

Fig. 6 shows waveforms of signals at parts of MAU 3n during the transmission of signals from DTE 2n. For example, when, as shown, a signal of "101011" is to be transmitted from DTE 2n, a signal having a waveform as shown in Fig. 6(A) is applied to receiving circuit 13 through signal line 42. Accordingly, complementary output signals 35 and 36, having waveforms as shown in Fig. 6(B) and (C), are taken from receiving circuit 13. Electric-to-optical converters 14 and 15 are constructed to produce a light signal in response to a high level input signal applied thereto. They are driven by complementary outputs 35 and 36 of receiving circuit 13 to generate, alternately, light signals of the wavelengths $\lambda_1$ and $\lambda_2$ as shown in Fig. 6(d) and (E), respectively. The light signals from electric-to-optical converters 14 and 15 are multiplexed by optical multiplexer 11 so that, as shown in Fig. 6(F), the light signals of the wavelengths $\lambda_1$ and $\lambda_2$ alternately pass through light transmission path 4n.

Fig. 7 shows waveforms of receiving signals at parts of MAU 3n when only one DTE transmits a signal. As mentioned before and as shown in Fig. 7(A), a light transmission signal with the alternate wavelengths $\lambda_1$ and $\lambda_2$ is applied to optical demultiplexer 12 via light transmission path 5n. The light signals of the wavelengths $\lambda_1$ and $\lambda_2$, shown in Figs. 7(B) and 7(C), which have been separated by optical demultiplexer 12, are applied to optical-to-electric converters 16 and 17, respectively. From optical-to-electric converters 16 and 17 are taken output electric signals which have waveforms shown in Fig. 7(D) and (E), in accordance with the input light signals applied thereto. These electric signals are both applied to demodulation circuit 18. An output signal of demodulation circuit 18, as shown in Fig. 7(F), is coupled to receiving signal line 43 via driver circuit 21.

The output signals of optical-to-electric converters 16 and 17 are applied to AND circuit 19 as well. This is intended to obtain a logical product of the light signals of the wavelengths $\lambda_1$ and $\lambda_2$. Where signal transmission is performed by one station, the light signals of the wavelength $\lambda_1$ and $\lambda_2$ do not overlap, with the result that no signal is output from AND circuit 19. Actually, however, due to waveform distortions introduced in electric-to-optical converters 14 and 15, light propagation distortion in optical fibers, or waveform distortions made in optical-to-electric converters 16 and 17, edges of the output signals of optical-to-electric converters 16 and 17 are ANDed and, as a result, a spike-like pulse is developed at the output of AND circuit 19, as shown in Fig. 7(G). Collision detection circuit 20 is arranged to produce, at its output 41, a collision detection signal of 10 MHz in response to application of an input signal having a specified pulse width or greater. The collision detection circuit 20, however, is not responsive to the spike-like pulse signal and thus does not produce an output signal. Collision detection circuit 20 may be formed of an integration circuit connected to receive an output signal 39 of AND circuit 19, and an oscillator circuit responsive to a predetermined output voltage of the integration circuit.

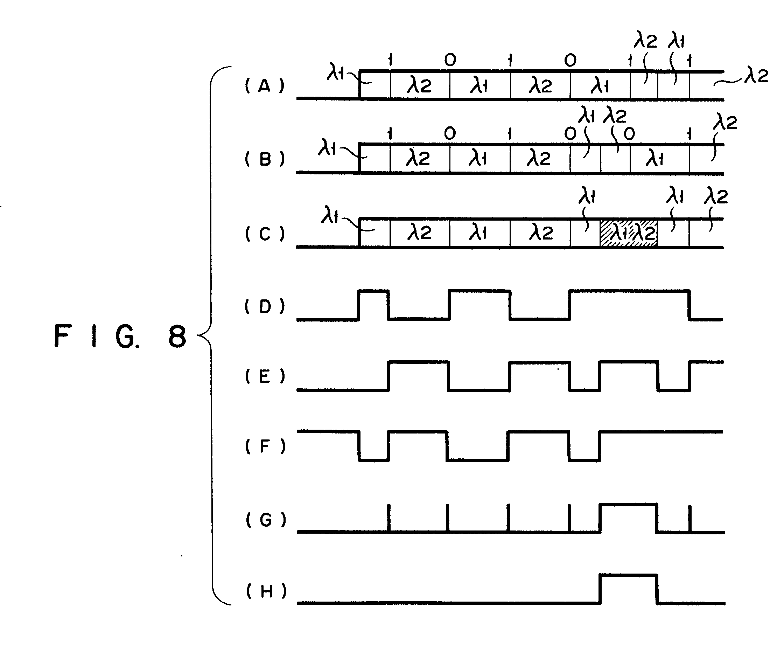

Next, a signal collision on the optical channel resulting from simultaneous transmission of signals from two stations will be described. Assume now that light signals have simultaneously reached star coupler 1 via optical fiber cables 4a and 4b. Fig. 8(A) shows a light signal of 101011 ... on optical fiber cable 4a, while Fig. 8(B) shows a light signal of 101001 ... on optical fiber cable 4b. From all the output ports of star coupler 1 are taken a mixed light signal of the light signals which have been transmitted by way of optical fiber cables 4a and 4b. The mixture of two light signals remains identical in wavelength with respect to the same state of the signals. However, the mixture has a mixed portion of the wavelengths $\lambda_1$ and $\lambda_2$ over one bit length for different states of the signals.

In MAU 3n, the light signal transmitted over optical fiber cable 5n is separated into light signals of the wavelengths $\lambda_1$ and $\lambda_2$ in optical demultiplexer 12 which are applied to optical-to-electric converters 16 and 17, respectively. In response to the mixed signal shown in Fig. 8 (C), an output signal shown in Fig. 8 (D) is taken out from optical-to-electric converter 16, and an output signal shown in Fig. 8(E) is taken out from optical-to-electric converter 17. In response to the application of these output signals, demodulation circuit 18 produces an output signal shown in Fig. 8(F). On the other hand, from AND circuit 19 is taken out an output signal, shown in Fig. 8(G), containing spike-like pulses and a one-bit length signal resulting from overlapping of the wavelengths $\lambda_1$ and $\lambda_2$. In response to this one-bit length signal, collision detection circuit 20 produces, on collision detection signal line 41, a collision detection signal of 10 MHz which indicates that a collision of signals has occurred on the light transmission paths. In Fig. 8(H), there is shown an envelope of the collision detection signal of 10 MHz. The collision detection signal is applied to DTE 2n via collision detection signal line 44 of tranceiver cable 6n.

As has been described above, in the optical network system according to the present invention, a signal collision on the light transmission path can be detected by not only stations in the transmission state, but also by all other stations in the reception state.

In the foregoing description, separate light emitting elements are employed for purposes of generating light signals of the wavelengths $\lambda_1$ and $\lambda_2$, but a single light emitting element capable of selectively generating light signals of two wavelengths may also be employed.

## Claims

1. An optical communication network system comprising:
   a plurality of data terminal stations (2a, 2b, ... 2n; 3a, 3b, ... 3n; and 6a, 6b, 6n); and,
   an optical communication medium (1; 4a, 4b, ... 4n; and 5a, 5b, ... 5n) for interconnecting said data terminal stations so as to transmit a light signal from each data terminal station to other stations to thereby effect communication among said stations;
   each data terminal station including;
   signal transmitting means (13, 14, 15, 11) for delivering a data signal for transmission through said optical communication medium in the form of light signals of the wavelengths $\lambda_1$ and $\lambda_2$ corresponding to two-value states thereof;
   signal separating means (12, 16, 17) connected to receive a light signal via said optical communication medium for separating the light signal into light signals of the wavelengths $\lambda_1$ and $\lambda_2$; and
   collision detecting means (19, 20) responsive to the separated light signals to detect an overlap on a time basis between the light signals of the wavelengths $\lambda_1$ and $\lambda_2$, said collision detecting means being arranged to produce, upon detecting an overlap between the wavelengths $\lambda_1$ and $\lambda_2$ over a specified time period, a collision detection signal indicating a collision of transmission signals from said data terminal stations.

2. An optical communication network system according to claim 1, characterized in that said light signal transmitting means includes means (13) for producing complementary signals of the data signal to be transmitted, and electric-to-optical converter means (14, 15) responsive to the complementary signals and alternately generating the light signals of the wavelengths $\lambda_1$ and $\lambda_2$.

3. An optical communication network system according to claim 2, characterized by further comprising means (11) for multiplexing the light signals of the wavelengths $\lambda_1$ and $\lambda_2$, generated by said electric-to-optical converter means.

4. An optical communication network system according to claim 1, characterized by further comprising demodulation means (18) for demodulating the data signal in response to the separated light signals.

5. An optical communication network system according to claim 1, characterized by further comprising optical-to-electric converter means (16, 17) for converting the separated light signals of the wavelengths $\lambda_1$ and $\lambda_2$ into electric signals, and in which said collision detecting means includes means (19) for obtaining a logical product of the electric signals corresponding to the light signals of the wavelengths $\lambda_1$ and $\lambda_2$.

6. An optical communication network system according to claim 1, characterized in that each said data terminal station includes data terminal equipment (2a, 2b, ... or 2n) and a medium attachment unit (3a, 3b, ... or 3n) for operatively coupling said data terminal equipment to said optical communication medium.

7. In an optical communication network system comprising a plurality of data terminal stations (2a, 2b, ... 2n; and 3a, 3b, ... 3n) and an optical communication medium (1, 4a, 4b, ... 5a, 5b, ...) for interconnecting said data terminal stations to transmit a light signal from station to station, a method of detecting a collision of transmission signals from said and in said optical communication medium data terminal stations comprises the steps of:
   converting a data signal to be transmitted into light signals of the wavelengths $\lambda_1$ and $\lambda_2$, corresponding to two value states thereof;
   alternately delivering the light signals of the wavelengths $\lambda_1$ and $\lambda_2$ into said optical communication medium;
   separating said light signals received via said optical communication medium into light signals of wavelengths $\lambda_1$ and $\lambda_2$;
   detecting an overlap, on a time basis, of the separated light signals of the wavelengths $\lambda_1$ and $\lambda_2$;
   and generating a collision detection signal when the overlap over a predetermined time period is detected.

## Patentansprüche

1. Optisches Nachrichtennetz, mit:
   mehreren Datenendstationen (2a, 2b, ... 2n; 3a, 3b, ... 3n; und 6a, 6b, ... 6n); und

einem optischen Kommunikationsmedium (1; 4a, 4b, ... 4n; und 5a, 5b, ... 5n) zum Verbinden der Datenendstationen, um ein Lichtsignal von jeder Datenendstation zu anderen Stationen zu übertragen, um dadurch eine Kommunikation unter den Stationen zu bewirken;

wobei jede Datenendstation aufweist:

eine Signalübertragungseinrichtung (13, 14, 15, 11) zum Abgeben eines Datensignals für eine Übertragung durch das optische Kommunikationsmedium in der Form von Lichtsignalen der Wellenlängen $\lambda_1$ und $\lambda_2$ entsprechend Zwei-Wert-Zuständen hiervon;

eine Signaltrenneinrichtung (12, 16, 17), die angeschlossen ist, um ein Lichtsignal über das optische Kommunikationsmedium zu empfangen, um das Lichtsignal in Lichtsignale der Wellenlängen $\lambda_1$ und $\lambda_2$ zu trennen; und

eine Kollisionsdetektoreinrichtung (19, 20), die auf die getrennten Lichtsignale anspricht, um eine Überlappung auf einer Zeitbasis zwischen den Lichtsignalen der Wellenlängen $\lambda_1$ und $\lambda_2$ zu erfassen, wobei die Kollisionsdetektoreinrichtung angeordnet ist, um nach Erfassung einer Überlappung zwischen den Wellenlängen $\lambda_1$ und $\lambda_2$ über einer bestimmten Zeitdauer ein Kollisionsdetektionssignal zu erzeugen, das eine Kollision von Übertragungssignalen von den Datenendstationen anzeigt.

2. Optisches Nachrichtennetz nach Anspruch 1, dadurch gekennzeichnet, daß die Licht-Signalübertragungseinrichtung eine Einrichtung (13) zum Erzeugen komplementärer Signale des zu übertragenden Datensignals und eine elektro/optische Wandlereinrichtung (14, 15), die auf die komplementären Signale anspricht und abwechselnd die Lichtsignale der Wellenlängen $\lambda_1$ und $\lambda_2$ erzeugt, aufweist.

3. Optisches Nachrichtennetz nach Anspruch 2, gekennzeichnet durch eine Einrichtung (11) zum Multiplexen der durch die elektro/optische Wandlereinrichtung erzeugten Lichtsignale der Wellenlängen $\lambda_1$ und $\lambda_2$.

4. Optisches Nachrichtennetz nach Anspruch 1, gekennzeichnet durch eine Demodulationseinrichtung (18) zum Demodulieren des Datensignales abhängig von den getrennten Lichtsignalen.

5. Optisches Nachrichtennetz nach Anspruch 1, gekennzeichnet durch eine opto-elektrische Wandlereinrichtung (16, 17) zum Umsetzen der getrennten Lichtsignale der Wellenlängen $\lambda_1$ und $\lambda_2$ in elektrische Signale, wobei die Kollisionsdetektoreinrichtung eine Einrichtung (19) zum Gewinnen eines logischen Produktes der elektrischen Signale entsprechend den Lichtsignalen der Wellenlängen $\lambda_1$ und $\lambda_2$ umfaßt.

6. Optisches Nachrichtennetz nach Anspruch 1, dadurch gekennzeichnet, daß jede der Datenendstationen eine Datenendausrüstung (2a, 2b, ... oder 2n) und eine Mediumbefestigungseinheit (3a, 3b, ... oder 3n) zum betriebsmäßigen Koppeln der Datenendausrüstung mit dem optischen Kommunikationsmedium hat.

7. Verfahren zum Erfassen einer Kollision von Übertragungssignalen von und in optischen Kommunikationsmedium-Datenendstationen in einem optischen Nachrichtennetz mit einer Vielzahl von Datenendstationen (2a, 2b, ... 2n; 3a, 3b, ... 3n) und einem optischen Kommunikationsmedium (l, 4a, 4b, ... 5a, 5b, ...) zum Verbinden der Datenendstationen, um ein Lichtsignal von Station zu Station zu übertragen, mit den Verfahrensschritten:

Umsetzen eines zu übertragenden Datensignals in Lichtsignale der Wellenlängen $\lambda_1$ und $\lambda_2$ entsprechend Zwei-Wert-Zuständen hiervon;

alternatives Abgeben der Lichtsignale der Wellenlänge $\lambda_1$ und $\lambda_2$ in das optische Kommunikationsmedium;

Trennen der über das optische Kommunikationsmedium empfangenen Lichtsignale in Lichtsignale der Wellenlängen $\lambda_1$ und $\lambda_2$;

Erfassen einer Überlappung auf Zeitbasis der getrennten Lichtsignale der Wellenlängen $\lambda_1$ und $\lambda_2$; und

Erzeugen eines Kollisionsdetektionssignales, wenn die Überlappung über einer vorbestimmten Zeitdauer erfaßt wird.

**Revendications**

1. Un réseau de communication optique comportant:

une pluralité de postes terminaux de données (2a, 2b, ... 2n; 3a, 3b, ... 3n; et 6a, 6b, ... 6n); et,

un agent de communication optique (1; 4a, 4b, ... 4n; et 5a, 5b, ... 5n) pour interconnecter lesdits postes terminaux de données de manière à transmettre un signal lumineux depuis chaque poste terminal de données jusqu'aux autres postes et effectuer ainsi une communication parmi lesdits postes;

chaque poste terminal de données comportant:

des moyens (13, 14, 15, 11) d'émission de signal pour délivrer un signal de données à transmettre à travers ledit agent de communication optique sous la forme de signaux lumineux de longueurs d'ondes $\lambda_1$ et $\lambda_2$ correspondant à des états de deux valeurs de celui-ci;

des moyens (12, 16, 17) de séparation de signaux reliés pour recevoir un signal lumineux par l'intermédiaire dudit agent de communication optique pour séparer le signal lumineux en des signaux lumineux de longueurs d'ondes $\lambda_1$ et $\lambda_2$; et

des moyens (19, 20) de détection de collisions sensibles aux signaux lumineux séparés pour détecter un chevauchement sur une base de temps entre les signaux lumineux de longueurs d'ondes $\lambda_1$ et $\lambda_2$; lesdits moyens de détection de collisions étant agencés pour produire, lors de la détection d'un chevauchement entre les longueurs d'ondes $\lambda_1$ et $\lambda_2$ sur une période de temps spécifiée, un signal de détection de collision indiquant une collision des signaux de transmission provenant desdits postes terminaux de données.

2. Un réseau de communication optique selon la revendication 1, caractérisé en ce que lesdits moyens d'émission de signal lumineux comportent des moyens (13) pour produire des signaux complémentaires du signal de données à émettre, et des moyens convertisseurs électrique à optique (14, 15) sensibles aux signaux complémentaires et engendrant alternativement les signaux lumineux de longueurs d'ondes $\lambda_1$ et $\lambda_2$.

3. Un réseau de communication optique selon la revendication 2, caractérisé en ce qu'il comporte en outre des moyens (11) pour multiplexer les signaux lumineux de longueurs d'ondes $\lambda_1$ et $\lambda_2$ engendrés par lesdits moyens convertisseurs électrique à optique.

4. Un réseau de communication optique selon la revendication 1, caractérisé en ce qu'il comporte en outre des moyens de démodulation (18) pour démoduler le signal de données en réponse aux signaux lumineux séparés.

5. Un réseau de communication optique selon la revendication 1, caractérisé en ce qu'il comporte en outre des moyens convertisseurs optique à électrique (16, 17) pour convertir les signaux lumineux séparés de longueurs d'ondes $\lambda_1$ et $\lambda_2$ en des signaux électriques, et dans lequel lesdits moyens de détection de collisions comportent des moyens (19) pour obtenir un produit logique des signaux électriques correspondant aux signaux lumineux de longueurs d'ondes $\lambda_1$ et $\lambda_2$.

6. Un réseau de communication optique selon la revendication 1, caractérisé en ce que chacun des postes terminaux de données comporte un équipement terminal de données (2a, 2b, ... 2n) et une unité de montage d'agent (3a, 3b, ... ou 3n) pour coupler opérativement ledit équipement terminal de données audit agent de communication optique.

7. Dans un réseau de communication optique comportant une pluralité de postes terminaux de données (2a, 2b, ... 2n; et 3a, 3b, ... 3n) et un agent de communication optique (1, 4a, 4b, ... 5a, 5b, ...) pour interconnecter lesdits postes terminaux de données de manière à émettre un signal lumineux de poste à poste, un procédé de détection d'une collision des signaux de transmission provenant desdits postes terminaux de données d'agent de communication optique comporte les phases consistant à:

convertir un signal de données à émettre en des signaux lumineux de longueurs d'ondes $\lambda_1$ et $\lambda_2$ correspondant à deux états de valeur oe celui-ci;

délivrer alternativement les signaux lumineux de longueurs d'ondes $\lambda_1$ et $\lambda_2$ dans ledit agent de communication optique;

séparer lesdits signaux lumineux reçus par l'intermédiaire dudit agent de communication optique en des signaux lumineux de longueurs d'ondes $\lambda_1$ et $\lambda_2$;

détecter un chevauchement, sur une base de temps, des signaux lumineux séparés de longueurs d'ondes $\lambda_1$ et $\lambda_2$; et

engendrer un signal de détection de collision lorsque le chevauchement sur une période de temps prédéterminée est détecté.

# F I G. 1

STAR
COUPLER

IN OUT

UP LINK

5n

4a          4b          5b          4n

5a          DOWN          5b
            LINK

3a    MAU    3b    MAU    ————————    MAU

                                      3n

6a          6b          6n

2a    DTE    DTE    2b    2n    DTE

# F I G. 2

4a          5a

4b          5b

4n          5n

STAR COUPLER

1

F I G. 3

F I G. 4

OPTICAL
MULTIPLEXER

# F I G. 5

50

$\lambda_1$

33

$\lambda_1, \lambda_2$

5n

34

t2
OPTICAL
DEMULTIPLEXER

$\lambda_2$

F I G. 6

1 0 1 0 1 1

(A)

(B)

(C)

(D) $\lambda_1$ $\lambda_1$ $\lambda_1$ $\lambda_1$

(E) $\lambda_2$ $\lambda_2$ $\lambda_2$ $\lambda_2$

(F) $\lambda_1$ $\lambda_2$ $\lambda_1$ $\lambda_2$ $\lambda_1$ $\lambda_2$ $\lambda_1$ $\lambda_2$

F I G. 7

F I G. 8